# EUROPEAN PATENT APPLICATION

(11) **EP 4 530 162 A1**
(43) Date of publication of application: **02.04.2025**
(21) Application number: 24196312.3
(22) Date of filing: 23.08.2024
(51) Int. Cl.: B62D 25/08, B60R 19/48, B62D 21/15

(54) **VEHICLE STRUCTURE**

(30) Priority: 15.09.2023 JP 2023150384; 29.03.2024 JP 2024057048
(71) Applicant: Suzuki Motor Corporation, Shizuoka 432-8611 (JP)
(72) Inventor: TAKANO, Yuji, HAMAMATSU-SHI, 432-8611 (JP)
(74) Representative: Plasseraud IP

(57) **Abstract**

[Problem to be Solved]

It is possible to efficiently absorb impact energy.

[Solution]

A vehicle structure 1 includes an outer panel 10 that forms a design surface of an outside of a vehicle in a front part or a rear part of the vehicle, a reinforcement member 20 that reinforces the outer panel 10 from a back surface side of the outer panel 10, a sensor device S that is attached to the reinforcement member 20 and senses an outside-vehicle environment, and a vehicle body structure 30 that is provided on the back surface side of the outer panel 10 and extends in a vehicle width direction. In the vehicle structure 1, the reinforcement member 20 includes a vertical extension part 20A that extends in a vehicle up-down direction, and a transverse extension part 20B that includes a projecting part 21 on each side in the vehicle width direction, the projecting part 21 projecting from one end side in the vehicle up-down direction of the vertical extension part 20A toward an outward side in the vehicle width direction and being coupled to the vehicle body structure 30.

## Description

### [Technical Field]

The present invention relates to a vehicle structure including a structure for arranging a sensor device in a front part or a rear part of a vehicle.

### [Background Art]

In general, an outer panel (also referred to as an exterior member) such as a bumper or a grille that forms a design surface on the outside of a vehicle is provided in a front part or a rear part of the vehicle such as an automobile, and a sensor device that senses (detects) an outside-vehicle environment using a camera, a radar, ultrasound, or the like is arranged on a back surface side of the outer panel in some cases.

A structure disclosed in Patent Literature 1 is known as an example of a vehicle structure having a structure for arranging a sensor device in a front part of a vehicle. The structure disclosed in Patent Literature 1 includes a bumper beam and an upper bar that are arranged in the front part of the vehicle to be spaced apart from each other in an up-down direction, and a bracket that extends from the bumper beam to the upper bar and supports a radar device, and the bracket is provided with deformation inducing parts that induce deformation due to an impact received at the time of a front collision of the vehicle. Then, in the structure disclosed in Patent Literature 1, in the event of a collision, the bracket is deformed or fractured at the deformation inducing parts to be displaced rearward, so that the impact is absorbed.

### [Citation List]

### [Patent Literature]

[Patent Literature 1] JP 2017-215186 A

### [Summary of Invention]

### [Problem to be Solved by the Invention]

However, in the structure of Patent Literature 1, since the bracket connecting between the bumper beam and the upper bar constituting a vehicle body structural member of the vehicle is locally deformed or fractured at the deformation inducing parts, the input impact energy cannot be absorbed entirely as deformation energy or fracture energy, which may make it impossible to sufficiently absorb the impact.

An object of the present invention is to provide a vehicle structure which makes it possible to efficiently absorb impact energy.

### [Means for Solving the Problems]

In order to achieve the object, one aspect of the present invention provides a vehicle structure including: an outer panel that forms a design surface of an outside of a vehicle in a front part or a rear part of the vehicle; a reinforcement member that reinforces the outer panel from a back surface side of the outer panel; a sensor device that is attached to the reinforcement member and senses an outside-vehicle environment; and a vehicle body structure that is provided on the back surface side of the outer panel and extends in a vehicle width direction, wherein the reinforcement member includes a vertical extension part that extends in a vehicle up-down direction, and a transverse extension part that includes a projecting part on each side in the vehicle width direction, the projecting part projecting from one end side in the vehicle up-down direction of the vertical extension part toward an outward side in the vehicle width direction and being coupled to the vehicle body structure.

In order to achieve the object, another aspect of the present invention provides a vehicle structure including: an outer panel that forms a design surface of an outside of a vehicle in a front part or a rear part of the vehicle; a reinforcement member that reinforces the outer panel from a back surface side of the outer panel; a sensor device that is attached to the reinforcement member and senses an outside-vehicle environment; and a vehicle body structure that is provided on the back surface side of the outer panel and extends in a vehicle width direction, wherein the vehicle body structure includes a first vehicle body structural member and a second vehicle body structural member that are spaced apart from each other in a vehicle up-down direction, the first vehicle body structural member is provided with an inner impact absorbing part that protrudes from the first vehicle body structural member toward the outward side of the vehicle in a vehicle front-rear direction and is formed to have a rigidity lower than a rigidity of the first vehicle body structural member, the second vehicle body structural member is provided with a support bracket that protrudes from the second vehicle body structural member toward a side of the first vehicle body structural member in a vehicle-up-down direction and is formed to have a rigidity lower than a rigidity of the second vehicle body structural member, and the reinforcement member is coupled to the first vehicle body structural member via the inner impact absorbing part and is coupled to the second vehicle structural member via the support bracket.

### [Advantageous Effects of Invention]

According to the one aspect or another aspect of the present invention, it is possible to provide a vehicle structure which makes it possible to efficiently absorb impact energy.

### [Brief Description of Drawings]

[Figure 1] Figure 1 is a perspective view of a vehicle structure according to an embodiment of the present invention.
[Figure 2] Figure 2 is a perspective view for explaining a main part of the vehicle structure.
[Figure 3] Figure 3 is a perspective view of the vehicle structure in a state in which an outer panel and a low-rigidity member are removed.
[Figure 4] Figure 4 is a side view of the vehicle structure in a state in which an outer panel and a low-rigidity member are removed.
[Figure 5] Figure 5 is a perspective view of a vehicle body structure.
[Figure 6] Figure 6 is a perspective view for explaining coupling positions of the low-rigidity member and the vehicle body structure.
[Figure 7] Figure 7 is a diagram seen from an inside of the vehicle for explaining coupling positions of the outer panel and a reinforcement member.
[Figure 8] Figure 8 is a perspective view seen from the inside of the vehicle for explaining the coupling positions of the outer panel and the reinforcement member.

### [Mode for Carrying Out the Invention]

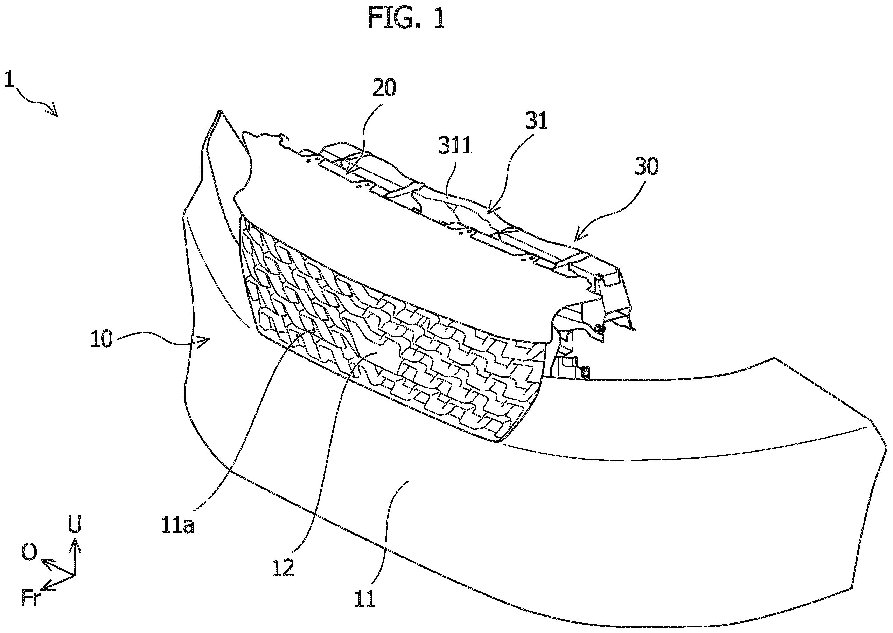

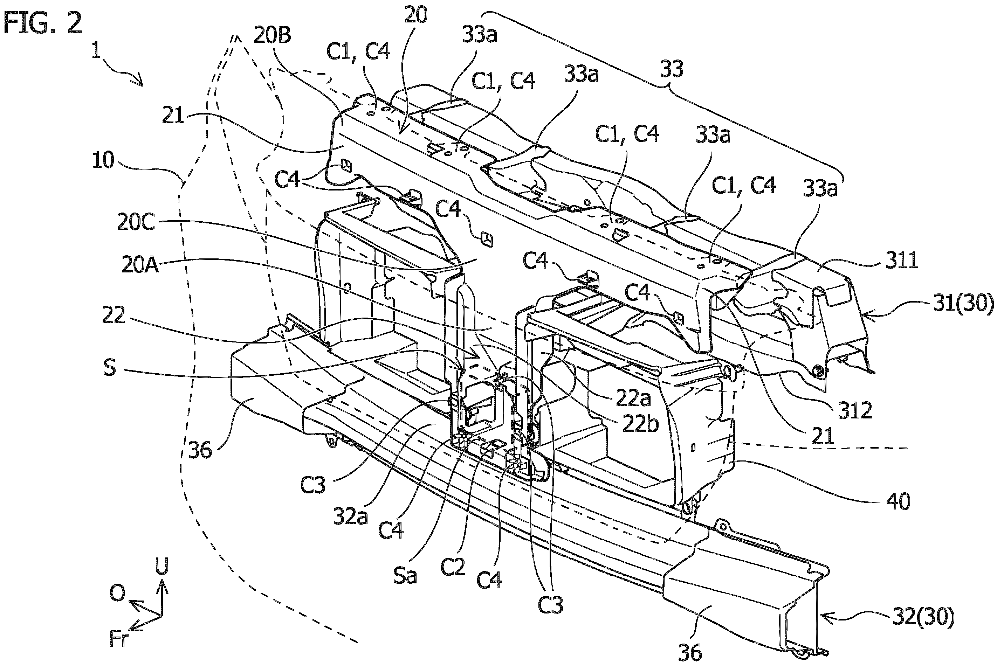

Hereinafter, embodiment of the present invention will be described with reference to the accompanying drawings. Figure 1 is a perspective view of a vehicle structure 1 according to one embodiment of the present invention when seen from a front side of a vehicle, and Figure 2 is a perspective view for explaining a main part of the vehicle structure 1. Note that, in each drawing, an arrow Fr direction indicates a forward direction of the vehicle in a vehicle front-rear direction, an arrow O direction indicates an outward direction of the vehicle in a vehicle width direction (outside in the vehicle width direction), and an arrow U direction indicates an upward direction of the vehicle in a vehicle up-down direction. In the following description, the terms "front" and "rear" correspond to front and rear in the vehicle front-rear direction, respectively, and the terms "up" and "down" correspond to up and down in the vehicle up-down direction, respectively. The terms "left" and "right" correspond to left and right in the vehicle width direction, respectively, when seen from the vehicle front side toward the vehicle rear side.

### (Outline of Vehicle Structure)

The vehicle structure 1 includes a structure for arranging a sensor device S that senses (detects) an outside-vehicle environment, on a back surface side of an outer panel 10 in a front part or a rear part of a vehicle. In the present embodiment, the vehicle structure 1 also includes a structure for reinforcing the outer panel 10 and attaching (fixing) the outer panel 10 to the vehicle body side. In the present embodiment, the vehicle structure 1 is used as a front structure of the vehicle.

Referring to Figures 1 and 2, in the present embodiment, the vehicle structure 1 includes the outer panel 10, a reinforcement member 20, a sensor device S, a vehicle body structure 30, and a low-rigidity member 40. Note that in Figure 2, an exterior shape of the sensor device S and an exterior shape of the outer panel 10 are indicated by broken lines.

The outer panel 10 is a so-called exterior member that forms a design surface of the outside of the vehicle in the front part or the rear part of the vehicle and extends in the vehicle width direction. In the present embodiment, the outer panel 10 is a front bumper that forms an outside design surface in the front part of the vehicle. The outer panel 10 which is a front bumper has, for example, a bumper front surface 11 extending entirely in the vehicle width direction. A front grille 11a made of plastic material is provided at a center of the bumper front surface 11, and a plurality of vents are open in the front grille 11a. That is, the outer panel 10 includes the front grille 11a which is an air intake member. Although not illustrated, in the present embodiment, a radiator is arranged at the rear of the outer panel 10 and the reinforcement member 20.

The reinforcement member 20 is a member for reinforcing the outer panel 10 from the back surface side of the outer panel 10 (i.e., a surface side opposite to the design surface of the outside of the vehicle) and fixing the outer panel 10 to the vehicle body (vehicle body structure 30). The reinforcement member 20 is, for example, an injection molded plastic member. The reinforcement member 20 is generally arranged along a center in the vehicle width direction of the back surface of the outer panel 10. Since the outer panel 10 is a large member that is thin and extends over a wide area in the vehicle width direction, the rigidity of the outer panel 10 is relatively low. In order to reinforce the low-rigidity outer panel 10, the reinforcement member 20 supports the outer panel 10 from the back surface of the outer panel 10 at a plurality of points. The reinforcement member 20 is coupled (fixed) to the vehicle body (vehicle body structure 30) at a plurality of points as described later, and is supported by the vehicle body structure 30 (first vehicle body structural member 31 and a second vehicle body structural member 32 described later in detail). The reinforcement member 20 is coupled (fixed) to the back surface of the outer panel 10 at the plurality of points, so that the outer panel 10 is supported from the back surface side. The structure of the reinforcement member 20 will be described later.

The sensor device S is a device that is attached to the reinforcement member 20 and senses the outside-vehicle environment. In the present embodiment, the sensor device S is a device configured to sense an obstacle (obstacle outside the vehicle) such as another vehicle located in front of the vehicle using electromagnetic waves. In the present embodiment, the sensor device S uses millimeter waves as the electromagnetic waves. That is, the sensor device S is a millimeter wave radar. The electromagnetic waves used by the sensor device S is not limited to the millimeter waves, and may be, for example, microwaves.

The sensor device S has a sensor end surface Sa located at a leading end on the outward side of the vehicle in the vehicle front-rear direction in the sensor device S. In the present embodiment, the sensor end surface Sa is a front end surface of the sensor device S. To be specific, the sensor end surface Sa is an end surface that faces the outward side of the vehicle in the vehicle front-rear direction (here, the forward direction of the vehicle) and from which the electromagnetic waves are output or to which the electromagnetic waves are input. At the rear of the outer panel 10 and the front grille 11a, the sensor device S is attached, via a coupling member such as a sensor support plate or a bolt (not illustrated), generally to a center lower portion in the vehicle width direction of the reinforcement member 20 in a state in which the sensor end surface Sa faces the forward direction of the vehicle, and is fixed to the reinforcement member 20. In this state, the sensor device S faces the back surface of the outer panel 10 in the front-rear direction. A region (portion) in the outer panel 10 that faces the sensor device S is formed using a material (e.g., a synthetic resin) that allows the electromagnetic waves to pass through, and is formed into a flat plate shape as a sensing wave passing region 12 (electromagnetic wave passing part).

The sensor device S outputs electromagnetic waves, and the output electromagnetic waves pass through the sensing wave passing region 12 of the outer panel 10 to be output in the forward direction of the vehicle. Then, if an obstacle is present in front of the vehicle, the electromagnetic waves output in the forward direction of the vehicle are reflected by the obstacle, and the sensor device S receives the electromagnetic waves that have been reflected by the obstacle and have passed through the sensing wave passing region 12 to thereby sense the obstacle in front of the vehicle.

The vehicle body structure 30 is provided on the back surface side of the outer panel 10 and extends in the vehicle width direction. The vehicle body structure 30 is formed by a high-rigidity member forming a part of the vehicle body. The vehicle front part is provided with the first vehicle body structural member 31 and the second vehicle body structural member 32 and the like as the vehicle body structure 30. That is, each element (31, 32) forms a part of the vehicle body structure 30 of the vehicle. Each element (31, 32) includes a thin metal plate and the like.

The low-rigidity member 40 is a member that is arranged in the periphery of the reinforcement member 20 and has a rigidity lower than the rigidity of the vehicle body structure 30. The low-rigidity member 40 is, for example, an injection molded plastic member. The low-rigidity member 40 is arranged between the radiator and the reinforcement member 20. The low-rigidity member 40 is, for example, an air guiding member such as a shroud that retains the radiator and forms an air intake path. The air that has passed through the plurality of vents in the front grilles 11a is guided to the radiator via the low-rigidity member 40 serving as the air guiding member.

### (Details of Vehicle Structure)

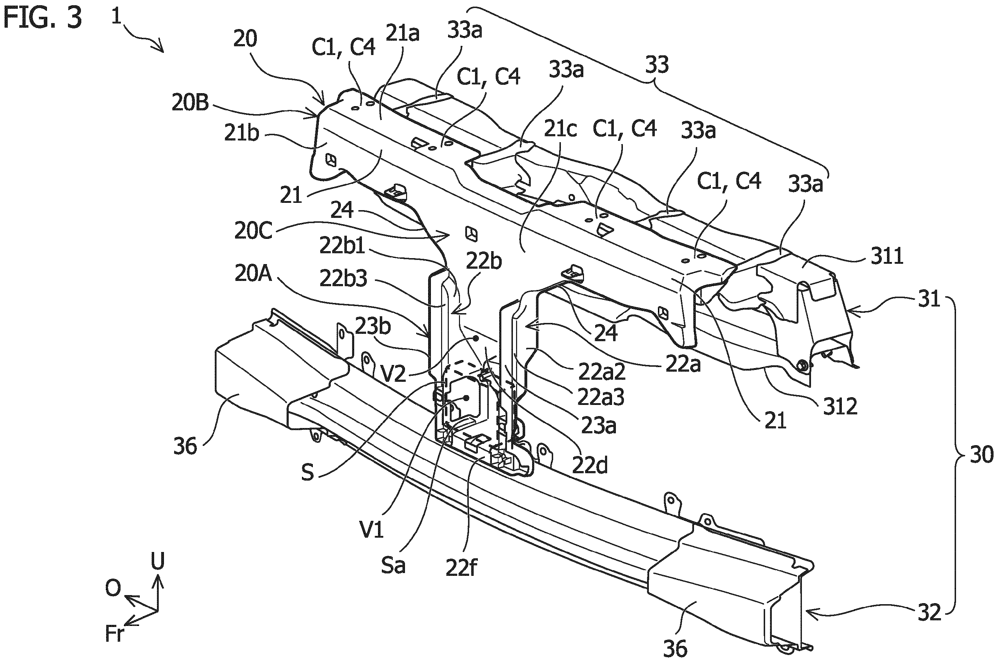

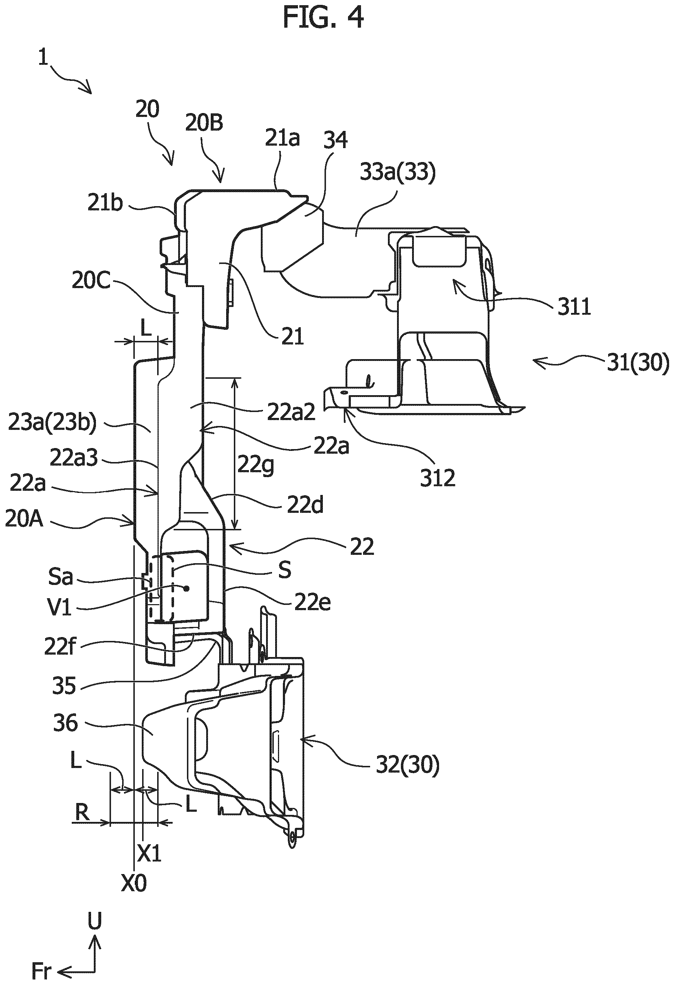

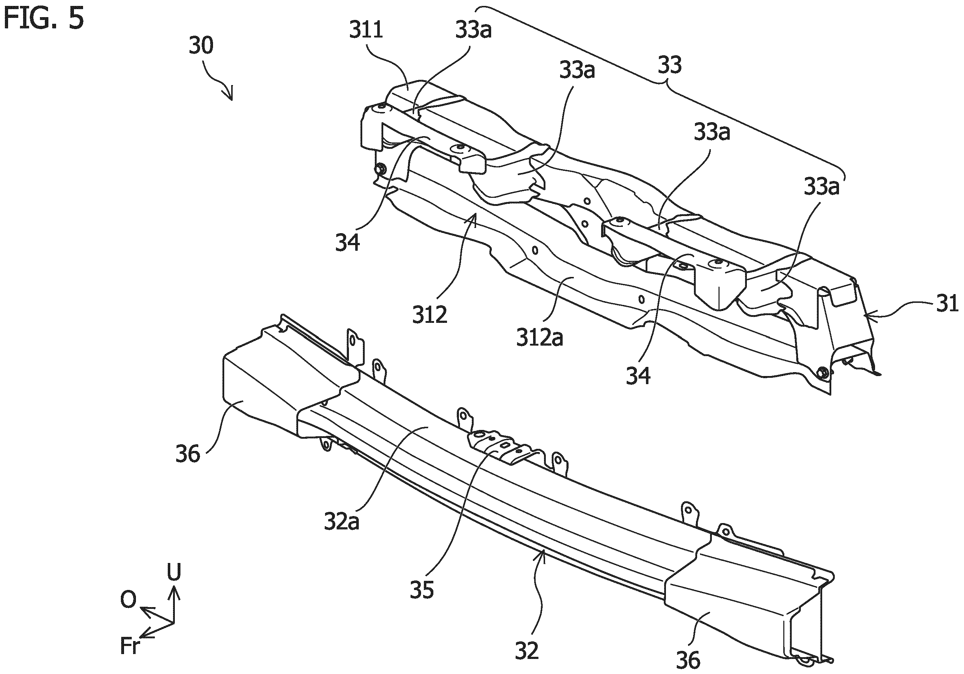

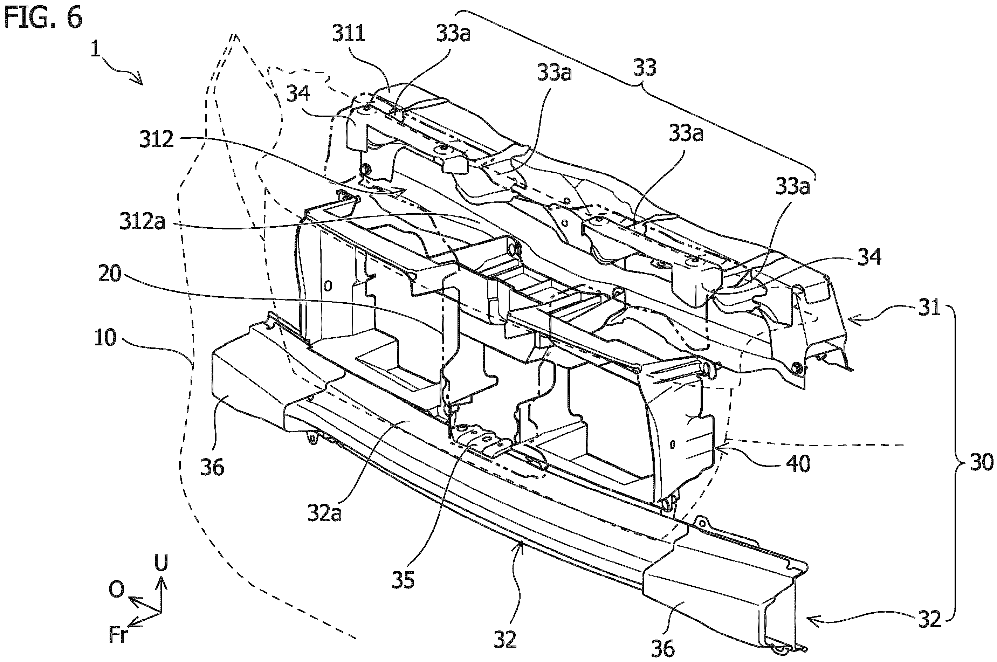

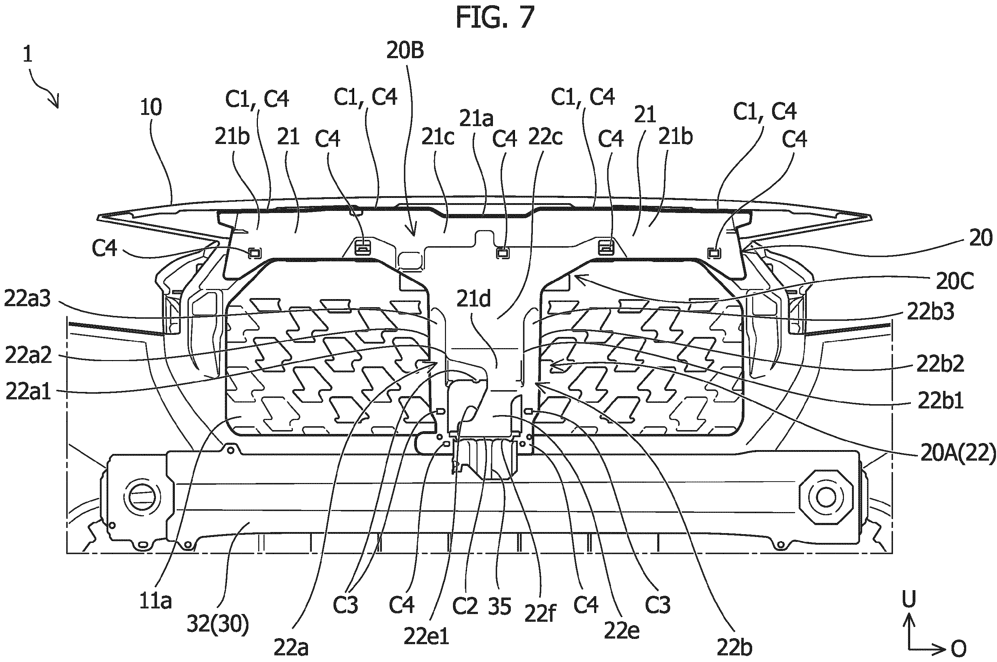

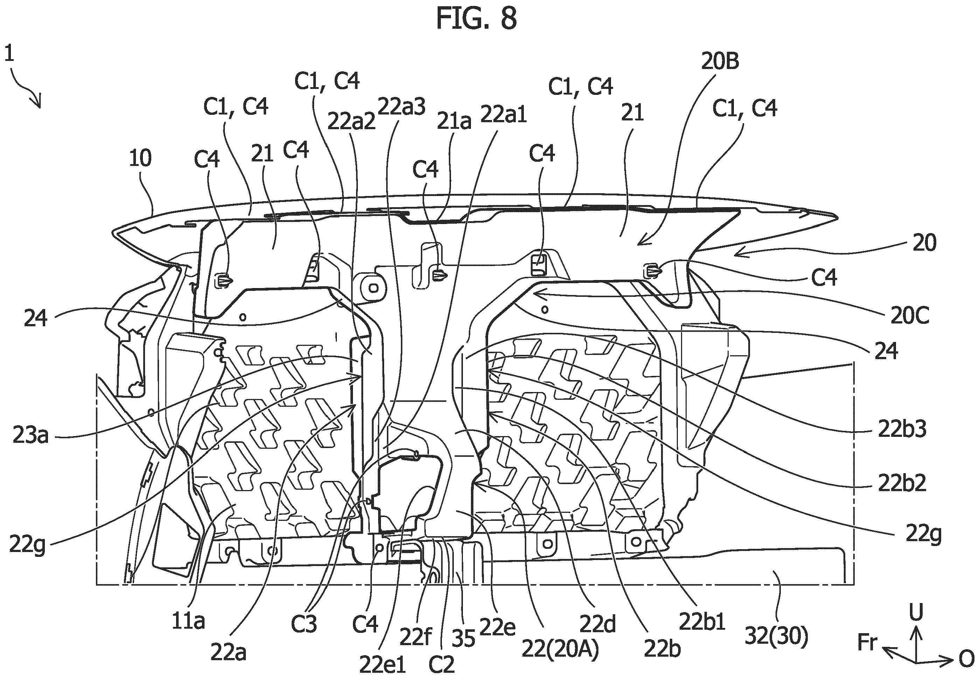

Hereinafter, the vehicle structure 1 will be described in detail with reference to Figures 1 to 8. Figure 3 is a perspective view of the vehicle structure 1 in a state in which the outer panel 10 and the low-rigidity member 40 are removed, Figure 4 is a side view of the vehicle structure 1 in a state in which the outer panel 10 and the low-rigidity member 40 are removed, and Figure 5 is a perspective view of the vehicle body structure. Figure 6 is a perspective view for explaining a coupling relationship between the low-rigidity member 40 and the vehicle body structure 30, Figure 7 is a view seen from an inside of the vehicle for explaining a coupling relationship between the outer panel 10 and the reinforcement member 20, and a Figure 8 is a perspective view seen from the inside of the vehicle for explaining the coupling relationship between the outer panel 10 and the reinforcement member 20. In Figure 6, an exterior shape of the outer panel 10 is indicated by a broken line, and an exterior shape of the reinforcement member 20 is indicated by a dash-double-dot line.

Referring to Figures 2 to 4, the reinforcement member 20 is arranged on the back surface side of the outer panel 10, and includes a vertical extension part 20A and a transverse extension part 20B. The reinforcement member 20 is formed substantially into a T-shape in planar view seen from the vehicle front-rear direction.

The vertical extension part 20A extends in the vehicle up-down direction. The transverse extension part 20B extends in the vehicle width direction. The transverse extension part 20B includes, on both sides in the vehicle width direction, projecting parts 21 projecting from one end side in the vehicle up-down direction of the vertical extension part 20A toward the outside in the vehicle width direction. In the present embodiment, the projecting parts 21 of the transverse extension part 20B project from an upper end side of the vertical extension part 20A. That is, in the present embodiment, "one end side (one side)" in the vehicle up-down direction of the vertical extension part 20A from which the projecting parts 21 project corresponds to an upper end side (upper side), and the transverse extension part 20B is located on the upper end side of the vertical extension part 20A. In the present embodiment, "one end side" in the vehicle up-down direction corresponds to an upper end side (upper side), and "the other end side (other side)" in the vehicle up-down direction corresponds to a lower end side (lower side).

In a side view, the reinforcement member 20 projects from the first vehicle body structural member 31 toward the outward side of the vehicle in the vehicle front-rear direction (here, in the forward direction), and then is bent so as to extend to the other end side (i.e., in the lower end side) in the vehicle up-down direction toward the second vehicle body structural member 32. That is, in the illustrated example, the transverse extension part 20B has a substantially L-shaped cross section and extends in the vehicle width direction, and the vertical extension part 20A forms a portion including a lower portion of the reinforcement member 20 and extends in the vehicle up-down direction. The reinforcement member 20 is formed generally along the bumper front surface 11 at the center in the vehicle width direction of the back surface of the outer panel 10.

In the present embodiment, the reinforcement member 20 includes a containing part (housing part) 22 in which the sensor device S is contained (housed). The containing part 22 is formed in a recessed shape that is recessed toward the inward side of the vehicle in the vehicle front-rear direction (here, in the rearward direction). In other words, the containing part 22 has the recessed shape that is open toward the outward side of the vehicle in the vehicle front-rear direction (in the forward direction), so that a containing space (housing space) in which the sensor device S is contained is formed inside the recessed shape. For that matter, the containing part 22 is formed, as a whole, in the recessed shape that bulges generally in the vehicle rearward direction.

In the present embodiment, the containing part 22 is provided in the vertical extension part 20A. That is, the vertical extension part 20A includes a containing part 22 in which the sensor device S is contained. In the present embodiment, the containing part 22 is provided in a portion (i.e., a lower portion) on the other end side (i.e., the lower side) in the vehicle up-down direction of the vertical extension part 20A.

In the present embodiment, the vehicle body structure 30 includes the first vehicle body structural member 31 and the second vehicle body structural member 32 as described above. The first vehicle body structural member 31 and the second vehicle body structural member 32 are spaced apart from each other in the vehicle up-down direction in the vehicle front part, and each of the first vehicle body structural member 31 and the second vehicle body structural member 32 extends in the vehicle width direction.

In the present embodiment, the first vehicle body structural member 31 is arranged on one end side (i.e., on the upper end side) in the vehicle up-down direction to be spaced apart from the second vehicle body structural member 32, and is referred to as an upper cross member or an upper bumper beam. The first vehicle body structural member 31 is also a hood lock member as a structural member that receives the front part of a front hood (not illustrated). Each end of the first vehicle body structural member 31 is joined to another member (not illustrated) of the vehicle body. The second vehicle body structural member 32 is arranged on the other end side (i.e., on the lower end side) in the vehicle up-down direction to be spaced apart from the first vehicle body structural member 31, and is referred to as a lower cross member or a lower bumper beam. Each end of the second vehicle body structural member 32 is joined to another member (e.g., a front side member) (not illustrated) of the vehicle body.

In the present embodiment, the second vehicle body structural member 32 is provided at a position offset toward the outward side of the vehicle (here, in the forward direction) in the vehicle front-rear direction with respect to the first vehicle body structural member 31. That is, the second vehicle body structural member 32 is located in front of and on the lower side of the first vehicle body structural member 31.

Referring to Figures 2 to 4, the reinforcement member 20 is connected to and supported by the first vehicle body structural member 31 and the second vehicle body structural member 32 that are spaced apart from each other in the vehicle up-down direction in the front part of the vehicle. In other words, the reinforcement member 20 is a member that extends from the first vehicle body structural member 31 to the second vehicle body structural member 32 and connects the first vehicle body structural member 31 and the second vehicle body structural member 32.

The reinforcement member 20 includes first vehicle body coupling parts C1 to be coupled (supported by) the first vehicle body structural member 31 and a second vehicle body coupling part C2 to be coupled to (supported by) the second vehicle body structural member 32. The first vehicle body coupling parts C1 are set at a plurality of positions (in the drawings, two positions on one side) in the projecting part 21 provided on each side in the vehicle width direction on the upper portion of the reinforcement member 20, and the second vehicle body coupling part C2 is set in the containing part 22 (a second front and rear wall 22f described later in detail) provided in the lower portion of the reinforcement member 20.
That is, the projecting parts 21 of the transverse extension part 20B are coupled to and supported by the vehicle body structure 30 (here, the first vehicle body structural member 31), and the containing part 22 of the vertical extension part 20A is coupled to and supported by the vehicle body structure (here, the second vehicle body structural member 32).

Referring to Figures 2 to 5, in the present embodiment, the first vehicle body structural member 31 includes a first upper cross member 311, and a first lower cross member 312 that is arranged on the lower side of the first upper cross member 311 in the vehicle up-down direction. The first upper cross member 311 and the first lower cross member 312 are coupled to each other, and extend while having approximately the same length in the vehicle width direction. The reinforcement member 20 is coupled to and supported by the first upper cross member 311 with respect to the first vehicle body structural member 31.

In the present embodiment, the first vehicle body structural member 31 is provided with an inner impact absorbing part 33 that protrudes from the first vehicle body structural member 31 toward the outward side of the vehicle in the vehicle front-rear direction and is formed to have a rigidity lower than the rigidity of the first vehicle body structural member 31. The projecting parts 21 of the transverse extension part 20B are coupled to and supported by the first vehicle body structural member 31 via the inner impact absorbing part 33.

The inner impact absorbing part 33 includes at least two impact absorbing pieces 33a that are spaced apart from each other in the vehicle width direction on each of the one side in the vehicle width direction and the other side in the vehicle width direction. The at least two impact absorbing pieces 33a are coupled by a coupling stay 34.

In the illustrated example, the two impact absorbing pieces 33a are provided on each of one side in the vehicle width direction and the other side in the vehicle width direction, and therefore, the inner impact absorbing part 33 includes four impact absorbing pieces 33a. The impact absorbing piece 33a is a member formed by bending a thin metal plate. The impact absorbing piece 33a extends to protrude forward from a portion corresponding to the projecting part 21 in the first upper cross member 311. The impact absorbing piece 33a (the inner impact absorbing part 33) is a member (upper bracket, and for that matter, an upper support bracket) formed to be physically separated from the first vehicle body structural member 31. A base end of the impact absorbing piece 33a is joined to the front surface and the upper surface of the first upper cross member 311.

The coupling stay 34 is provided for each of the two impact absorbing pieces 33a on one side in the vehicle width direction and the two impact absorbing pieces 33a on the other side in the vehicle width direction. The coupling stay 34 is a member formed by bending a thin metal plate, and extends in the vehicle width direction. The coupling stay 34 extends in the vehicle width direction so as to span the leading ends of the two impact absorbing pieces 33a, and connects the leading ends of the two impact absorbing pieces 33a to each other.

In the present embodiment, the second vehicle body structural member 32 is provided with a support bracket 35 that protrudes in the upward direction of the vehicle from the second vehicle body structural member 32 and is formed to have a rigidity lower than the rigidity of the second vehicle body structural member. The support bracket 35 supports the lower portion (here, the containing part 22) of the reinforcement member 20 from the lower side. The containing part 22 of the vertical extension part 20A is coupled to and supported by the second vehicle body structural member 32 via the support bracket 35.

The support bracket 35 is a member formed by bending a thin metal plate. That is, in the present embodiment, the support bracket 35 is a member (lower bracket, and for that matter, a lower support bracket) formed to be physically separated from the second vehicle body structural member 32. The support bracket 35 is joined to the second vehicle body structural member 32.

The first vehicle body portions C1 on the upper portion of the reinforcement member 20 are coupled to (supported by) the first vehicle body structural member 31 by coupling the projecting parts 21 of the transverse extension part 20B to an upper surface of the coupling stay 34 with coupling members such as a bolt, and the second vehicle body coupling part C2 in the lower portion of the reinforcement member 20 is coupled to (supported by) the second vehicle body structural member 32 by engaging the containing part 22 (the second front and rear wall 22f described later) of the vertical extension part 20A with the support bracket 35.

Next, the shape, structure and the like of the reinforcement member 20 will be mainly described in more detail.

In the present embodiment, the reinforcement member 20 includes a connection part 20C that connects the vertical extension part 20A and the transverse extension part 20B.
The reinforcement member 20 is formed substantially into a T-shape in planar view seen from one side in the vehicle front-rear direction. That is, the reinforcement member 20 is, as a whole, divided into the transverse extension part 20B that extends in the vehicle width direction, the vertical extension part 20A that extends in the vehicle up-down direction, and the connection part 20C that connects a center in the vehicle width direction of the transverse extension part 20B and an upper end of the vertical extension part 20A.

In the present embodiment, the connection part 20C is widened in the vehicle width direction toward the transverse extension part 20B from the vertical extension part 20A. In the illustrated example, the connection part 20C is formed into an inverted trapezoidal shape in planar view seen from the vehicle front-rear direction.

The containing part 22 includes a first vertical side part 22a, a second vertical side part 22b, an upper connecting wall 22c, a first front and rear wall 22d, a bottom wall (innermost wall) 22e, and the second front and rear wall 22f, and the containing space is defined by these elements. Note that in the present embodiment, each of the first vertical side part 22a and the second vertical side part 22b corresponds to a "vertical side part" according to the present invention.

The first vertical side part 22a is a side part on one side in the vehicle width direction of the containing part 22, and the second vertical side part 22b is a side part on the other side in the vehicle width direction of the containing part 22. The first vertical side part 22a and the second vertical side part 22b each extend generally in the vehicle up-down direction. The first vertical side part 22a and the second vertical side part 22b are portions by which the sensor device S is positioned to be attached.

Each of the upper portion of the first vertical side part 22a and the upper portion of the second vertical side part 22b is formed into a shape having a bulging part 22g (bulging structure) bulging toward the outward side of the vehicle (in the forward direction of the vehicle) in the vehicle front-rear direction.

The first vertical side part 22a has a first inner wall 22a1 (see Figures 7 and 8) and a first outer wall 22a2 that are spaced apart from each other in the vehicle width direction, and a first end wall 22a3 that faces the outward side of the vehicle in the vehicle front-rear direction (forward direction of the vehicle). The first end wall 22a3 extends from one end of the upper connecting wall 22c to one end of the second front and rear wall 22f, and connects a front end of the first inner wall 22a1 and a front end of the first outer wall 22a2.

In similar fashion, the second vertical side part 22b has a second inner wall 22b1 and a second outer wall 22b2 (see Figures 7 and 8) that are spaced away from each other in the vehicle width direction, and a second end wall 22b3 that faces the outward side of the vehicle in the vehicle front-rear direction (forward direction of the vehicle). The second end wall 22b3 extends from the other end of the upper connecting wall 22c to the other end of the second front and rear wall 22f, and connects a front end of the second inner wall 22b1 and a front end of the second outer wall 22b2. Note that in the present embodiment, each of the first end wall 22a3 and the second end wall 22b3 corresponds to an "end wall" according to the present invention.

In this way, in the present embodiment, the bulging part 22g (described above) of the reinforcement member 20 bulges toward the outward side of the vehicle in the front-rear direction in the portion (the first vertical side part 22a, the second vertical side part 22b) including the end wall (the first end wall 22a3, the second end wall 22b3) in the reinforcement member 20.

The upper connecting wall 22c connects the upper portion of the first vertical side part 22a and the upper portion of the second vertical side part 22b. The upper connecting wall 22c extends continuously to the lower end of the connection part 20C.

The first front and rear wall 22d extends from the first vertical side part 22a and the second vertical side part 22b toward the inward side of the vehicle in the vehicle front-rear direction (in the rearward direction). In the illustrated example, the first front and rear wall 22d is inclined in a direction away from the outer panel 10 toward the lower side. The first front and rear wall 22d is continuous to a lower end of the upper connecting wall 22c and couples the first vertical side part 22a and the second vertical side part 22b.

The bottom wall 22e extends from an inward side end (rear end) of the first front and rear wall 22d toward the other end side (lower end side) in the vehicle up-down direction and faces an inward side surface (rear surface) in the vehicle front-rear direction of the sensor device S. The bottom wall 22e is a wall on an innermost side (i.e., an innermost wall, in the illustrated example, also referred to as a rear wall) that forms a bottom of a recess in the vehicle front-rear direction in the containing part 22. Each of the first vertical side part 22a, the second vertical side part 22b, the first front and rear wall 22d and the second front and rear wall 22f is connected to a peripheral edge of the bottom wall 22e.

The second front and rear wall 22f extends from an end on the other end side (lower end side) in the vehicle up-down direction of the bottom wall 22e toward the outward side of the vehicle in the vehicle front-rear direction (in the forward direction). The second front and rear wall 22f connects the lower end of the first vertical side part 22a and the lower end of the second vertical side part 22b.

In the present embodiment, the containing part 22 is coupled to the vehicle body structure 30 (here, the second vehicle body structural member 32) at the second front and rear wall 22f. That is, the second vehicle body coupling part C2 is provided on the second front and rear wall 22f.

Here, in the illustrated example, the sensor device S is arranged in a lower region V1 which is a region on the second vehicle body structural member side (lower side) in the containing space of the containing part 22. The lower region V1 is a space surrounded by a second vehicle body structural member-side portion (lower portion in the illustrated example) of the first vertical side part 22a, a second vehicle body structural member-side portion (lower portion) of the second vertical side part 22b, a second front and rear wall 22f, and a second vehicle body structural member-side portion (lower portion) of the bottom wall 22e. In other words, the lower region V1 is provided between the second vehicle body structural member-side portion of the first vertical side part 22a and the second vehicle body structural member-side portion of the second vertical side part.

In the present embodiment, the reinforcement member 20 includes, in each of the first vertical side part 22a and the second vertical side part 22b, a protruding part (23a, 23b) protruding from the end wall (the first end wall 22a3, the second end wall 22b3). Each protruding part (23a, 23b) protrudes to the outward side of the vehicle (in the forward direction) with respect to the containing part 22 in the vehicle front-rear direction. That is, the first vertical side part 22a includes the protruding part 23a projecting forward with respect to the containing part 22, and the second vertical side part 22b includes the protruding part 23b projecting forward with respect to the containing part 22.

In the present embodiment, in each of the first vertical side part 22a and the second vertical side part 22b, the protruding part (23a, 23b) is a rib formed into a thin-plate shape extending in the vehicle up-down direction. In the bulging part 22g bulging forward in the first vertical side part 22a and the second vertical side part 22b, each of the front surface of the first end wall 22a3 and the front surface of the second end wall 22b3 forms a seat surface of the protruding part (23a, 23b). The protruding part (23a, 23b) extends to the vicinity of the back surface of the outer panel 10, and the front end of the protruding part (23a, 23b) is located in the vicinity of the back surface of the outer panel 10.

In the present embodiment, the protruding part (23a, 23b) extends continuously toward the transverse extension part 20B at a height position corresponding to the region (i.e., an upper region V2) on one end side (i.e., an upper end side) in the vehicle up-down direction in the containing part 22. To be specific, the protruding part (23a, 23b) extends in the up-down direction along the end wall (the first end wall 22a3, the second end wall 22b3) at the height position corresponding to the region (upper region V2) above the sensor device S and the lower region V1 of the containing part 22. In the illustrated example, the protruding part (23a, 23b) extends to the upper end (in detail, the upper end of the vertical extension part 20A) of the vertical side part (the first vertical side part 22a, the second vertical side part 22b).

In the present embodiment, the first front and rear wall 22d extends from a portion (i.e., a portion at the height position corresponding to the upper region V2 of the containing part 22) provided with the protruding part (23a, 23b) in the first vertical side part 22a and the second vertical side part 22b toward the inward side of the vehicle in the vehicle front-rear direction (in the rearward direction). To be specific, the first front and rear wall 22d extends obliquely rearward and downward from the first inner wall 22a1 and the second inner wall 22b 1 at the height position corresponding to an intermediate height position in the up-down direction of the protruding part (23a, 23b).

In the present embodiment, the connection part 20C of the reinforcement member 20 is continuous to the protruding parts (23a, 23b) and the bulging parts 22g. To be specific, an upper end of the connection part 20C is connected to a lower end at the center in the vehicle width direction of the transverse extension part 20B, and a lower end of the connection part 20C is connected to the upper connecting wall 22c of the vertical extension part 20A, upper ends of the left and right bulging parts 22g, and upper ends of left and right protruding parts (23a, 23b). In detail, left and right inclined edges 24 that are outer edges in the vehicle width direction of the connection part 20C are connected to the upper ends of the bulging parts 22g and the upper ends of the protruding parts (23a and 23b).

Referring to Figures 2 to 6, in the present embodiment, the vehicle body structure 30 is provided with a panel impact absorbing part 36 that protrudes from the vehicle body structure 30 toward the outward side of the vehicle (in the forward direction) in the vehicle front-rear direction and is formed to have a rigidity lower than the rigidity of the vehicle body structure 30. In the illustrated example, the panel impact absorbing part 36 is provided in the second vehicle body structural member 32.

To be specific, the panel impact absorbing part 36 is a member formed by bending a thin metal plate. The panel impact absorbing part 36 is provided for each of both side in the vehicle width direction in the front surface of the second vehicle body structural member 32. The panel impact absorbing part 36 is a member formed to be physically separated from the second vehicle body structural member 32. A base end of the panel impact absorbing part 36 is joined to the front surface of the second vehicle body structural member 32.

Referring to Figure 4, a protruding leading end X1 (i.e., a leading end on the outward side of the vehicle, and for that matter, the front end) of the panel impact absorbing part 36 and a protruding leading end X0 of the protruding part (23a, 23b) are located in a predetermined very small range R in the vehicle front-rear direction. That is, the position of the protruding leading end X1 of the panel impact absorbing part 36 and the position of the protruding leading end X0 of the protruding part (23a, 23b) are in close proximity to each other in the vehicle front-rear direction. In the illustrated example, the protruding leading end X1 of the panel impact absorbing part 36 is located slightly rearward with respect to the protruding leading end X0 of the protruding part (23a, 23b) in the vehicle front-rear direction. Although not limited in particular, the front end in the predetermined very small range R is located at a position separated forward from the protruding leading end X0 of the protruding part (23a, 23b) by a protruding length L in the front-rear direction of the protruding part (23a, 23b), and the rear end in the predetermined very small range R is located at a position separated rearward from the protruding leading end X0 of the protruding part (23a, 23b) by a protruding length L. That is, the protruding leading end X1 of the panel impact absorbing part 36 is provided, in the vehicle front-rear direction, at a predetermined position in the very small range R corresponding to a protruding length L of the protruding part (23a, 23b) on each side in the vehicle front-rear direction from the protruding leading end X0 of the protruding part (23a, 23b). Note that the entire width in the front-rear direction of the predetermined very small range R may be a length corresponding to the protruding length L of the protruding part (23a, 23b). The protruding leading end X1 of the panel impact absorbing part 36 may be located, in the vehicle front-rear direction. slightly rearward with respect to the protruding leading end X0 of the protruding part (23a, 23b) or may coincide with the protruding leading end X0.

In the present embodiment, the sensor device S is arranged inside the containing part 22 such that the sensor end surface Sa does not protrude forward with respect to the front end of the containing part 22 (the front surface of the first end wall 22a3 and the front surface of the second end wall 22b3) in the vehicle front-rear direction.

The reinforcement member 20 includes a plurality (here, three) of sensor fixing parts C3 for arranging the sensor device S at a predetermined position of the lower region V1.
The sensor fixing parts C3 are provided to, for example, the first end wall 22a3, the second end wall 22b3, and the first front and rear wall 22d. Although not illustrated, the sensor support plate is fixed to the rear surface of the sensor device S. The sensor support plate is positioned relative to the containing part 22 by the three sensor fixing parts C3 and is fastened to the containing part 22 by the coupling members such as a bolt, so that the sensor device S is attached to the reinforcement member 20 in the lower region V1.

In the present embodiment, a harness insertion port 22e1 is open in a portion of the bottom wall 22e. Electrical wires (such as in a harness (not illustrated) to be connected to the sensor device S) are pulled out rearward of the reinforcement member 20 through the harness insertion port 22e1.

Referring to Figure 6, the low-rigidity member 40 is connected to and supported by the first vehicle body structural member 31 and the second vehicle body structural member 32. To be specific, the rear end of the upper portion of the low-rigidity member 40 is coupled to the front portion 312a of the first lower cross member 312 with respect to the first vehicle body structural member 31. The lower portion of the low-rigidity member 40 is coupled to the upper portion 32a of the second vehicle body structural member 32.

Next, referring to Figures 2, 3, 7, and 8, coupling positions of the outer panel 10 and the reinforcement member 20 will be described. Figure 7 is a diagram seen from the inside of the vehicle for explaining the coupling positions, and Figure 8 is a perspective view seen from the inside of the vehicle for explaining the coupling positions. In Figures 7 and 8, the first vehicle body structural member 31 and the low-rigidity member 40 are not illustrated.

In the present embodiment, in the reinforcement member 20, a plurality of panel coupling parts C4 to be coupled to the outer panel 10 are provided in each of the transverse extension part 20B and the vertical extension part 20A. In the illustrated example, the panel coupling parts C4 are set in the left and right projecting parts 21 and the center in the vehicle width direction in the transverse extension part 20B, and are set in the containing part 22 in the vertical extension part 20A. That is, each of the projecting parts 21 and the containing part 22 has the panel coupling parts C4.

To be specific, in each projecting part 21, each of an upper wall 21a and a front wall 21b in the projecting part 21 is provided with two panel coupling parts C4. The front wall 21c at the center in the vehicle width direction of the transverse extension part 20B is provided with one panel coupling part C4. The front wall of the second front and rear wall 22f of the containing part 22 is provided with two panel coupling parts C4. In each panel coupling part C4, an appropriate form of coupling structure such as bolt fastening with a coupling member such as a bolt, engaging an engaging claw with an engaging hole, and fixing with a clip is applied. The coupling structure corresponding to the coupling structure of each panel coupling part C4 is applied to a portion on the outer panel 10 side corresponding to the panel coupling part C4. In the illustrated example, the panel coupling parts C4 provided in the upper wall 21a of each projecting part 21 serve as the first vehicle body coupling parts C1. The panel coupling parts C4 provided in the front wall 21b of each projecting part 21 function as positioning parts that determine relative position between the outer panel 10 and the reinforcement member 20.

According to the vehicle structure 1 according to the present embodiment configured as described above, the reinforcement member 20 includes the vertical extension part 20A that extends in the vehicle up-down direction, and the transverse extension part 20B that includes, on each side in the vehicle width direction, the projecting part 21 that projects from one end side in the vehicle up-down direction of the vertical extension part 20A toward the outward side in the vehicle width direction and is coupled to the vehicle body structure 30. As a result, in the event of a front collision or a rear collision of the vehicle (in the present embodiment, the front collision), the impact load input to the vehicle is dispersed in the vehicle width direction by the transverse extension part 20B having the projecting part 21 extending in the vehicle width direction to be input to the reinforcement member 20, whereby the impact load can be prevented from locally concentrating at and being input to the reinforcement member 20. Therefore, the input impact load is effectively absorbed as deformation energy of the reinforcement member 20 and the like, whereby the impact energy can be effectively absorbed.

In this way, the vehicle structure 1 according to the present embodiment is a vehicle structure which makes it possible to efficiently absorb impact energy.

Since each projecting part 21 of the transverse extension part 20B is coupled to the vehicle body structure 30 extending in the vehicle width direction, even when the projecting part 21 extends toward the outward side in the vehicle width direction, the twisting deformation in which the reinforcement member 20 is twisted around the vertical extension part 20A can be effectively prevented from occurring during the normal use. As a result, during normal use, the change in the orientation of the sensor device S can be effectively reduced and the sensor sensing accuracy can be effectively maintained.

In the present embodiment, since the vertical extension part 20A includes the containing part 22 for the sensor device S, the stability in holding the sensor device S during normal use can be achieved as compared with a case in which the sensor device S is provided to the projecting parts 21.

In the present embodiment, since the connection part 20C of the reinforcement member 20 is widened in the vehicle width direction toward the transverse extension part 20B from the vertical extension part 20A, in the event of a collision, the impact load input to the transverse extension part 20B is efficiently transmitted to the vertical extension part 20A, so that the impact load is efficiently dispersed to the entire reinforcement member 20. The rigidity (twist rigidity) with respect to the twisting deformation of the reinforcement member 20 during the normal use can be improved.

In the present embodiment, the containing part 22 is provided on the other end side in the vehicle up-down direction of the vertical extension part 20A, and is coupled to the vehicle body structure 30 (here, the second vehicle body structural member 32). As a result, during normal use, the displacement of the containing part 22 due to vibration during travel or the like can be reduced, and the sensing accuracy of the sensor device S can be effectively maintained and improved.

In the present embodiment, the containing part 22 has the panel coupling parts C4 to be coupled to the outer panel 10. As a result, a peripheral portion of the sensor device S is coupled to the outer panel 10, whereby the supporting rigidity for the sensor device S in the reinforcement member 20 can be improved, during normal use, the displacement of the sensor device S due to vibration during travel or the like can be reduced, and the sensing accuracy of the sensor device S can be effectively maintained and improved.

In the present embodiment, since the projecting parts 21 are coupled to the first vehicle body structural member 31, and the containing part 22 is coupled to (supported by) the second vehicle body structural member 32, during the normal use, the supporting rigidity of the reinforcement member 20 can be further increased and the twisting deformation of the reinforcement member 20 can be surely prevented from occurring. Since the containing part 22 is connected to the second vehicle body structural member 32, a portion adjacent to the sensor device S is supported by the vehicle body structure 30. As a result, the displacement of the sensor device S during normal use can be further reduced.

In the present embodiment, since the protruding part (23a, 23b) projects to the outward side of the vehicle with respect to the containing part 22 in the vehicle front-rear direction, in the event of a collision, the transmission of the impact load to the sensor device S can be reduced. Before the impact load is input to the sensor device S, at least part of the impact energy can be absorbed as the deformation energy of the protruding part (23a, 23b). As a result, the protection performance of the sensor device S can be improved.

In the present embodiment, since the protruding part (23a, 23b) extends continuously toward the transverse extension part 20B at a height position corresponding to the region on one end side in the vehicle up-down direction in the containing part 22, the impact load can be transmitted in the direction vertically away from the sensor device S. As a result, the protection of the sensor device S can be improved.

In the present embodiment, the containing part 22 includes the vertical side part (the first vertical side part 22a, the second vertical side part 22b) that is formed in a recessed shape that is recessed toward the inward side of the vehicle in the vehicle front-rear direction, is coupled to the vehicle body structure 30, includes the end wall (the first end wall 22a3, the second end wall 22b3), and extends in the vehicle front-rear direction, the first front and rear wall 22d that extends from a portion provided with the protruding part (23a, 23b) in the vertical side part (the first vertical side part 22a, the second vertical side part 22b) toward the inward side of the vehicle in the vehicle front-rear direction, the bottom wall 22e, and the second front and rear wall 22f, and the bottom wall 22e extends from the vehicle inner end of the first front and rear wall 22d toward the other end side (here, the lower end side) in the vehicle up-down direction and faces a surface on the inward side of the vehicle in the vehicle front-rear direction of the sensor device S, the second front and rear wall 22f extends from an end on the other end side (lower end side) in the vehicle up-down direction of the bottom wall 22e toward the outward side of the vehicle in the vehicle front-rear direction, and the containing part 22 is coupled to the vehicle body structure 30 at the second front and rear wall 22f. Therefore, the impact load input to the protruding part (23a, 23b) is easily transmitted to the vehicle body structure 30 (here, the second vehicle body structural member 32) via the vertical side part (the first vertical side part 22a, the second vertical side part 22b), the first front and rear wall 22d, the bottom wall 22e, and the second front and rear wall 22f. That is, a load transmission path from the protruding part (23a, 23b) to the vehicle body structure 30 is formed so as to bypass the containing part 22 and the sensor device S, which makes it easy for the impact load (external force) to be dispersed in the up-down direction and makes it possible to improve the protection of the sensor device S. Since the protruding part (23a, 23b) is formed in a thin plate shape, the impact can be easily absorbed.

In the present embodiment, the vehicle body structure 30 (here, the second vehicle body structural member 32) is provided with a panel impact absorbing part 36 that protrudes from the vehicle body structure 30 toward the outward side of the vehicle in the vehicle front-rear direction, and the protruding leading end X1 of the panel impact absorbing part 36 and the protruding leading end X0 of the protruding part (23a, 23b) are located in the predetermined very small range R in the vehicle front-rear direction. Therefore, the impact load is dispersed in and input to the panel impact absorbing part 36 and the protruding part (23a, 23b), and the impact energy is effectively absorbed as the deformation energy of the reinforcement member 20 and the panel impact absorbing part 36, whereby the impact energy can be effectively absorbed.

In the present embodiment, the reinforcement member 20 includes the bulging part 22g that bulges toward the outward side of the vehicle in the vehicle front-rear direction in a portion (the first vertical side part 22a, the second vertical side part 22b) including the end wall (the first end wall 22a3, the second end wall 22b3). Therefore, the impact load that cannot be absorbed entirely due to deformation in the protruding part (23a, 23b) in the event of a collision is received by the bulging part 22g, whereby the load can be dispersed. This makes it difficult to cause the twisting deformation of the reinforcement member 20 during normal use, whereby sensing accuracy can be further improved.

In the present embodiment, in the reinforcement member 20, the connection part 20C that connects the vertical extension part 20A and the transverse extension part 20B is widened in the vehicle width direction toward the transverse extension part 20B from the vertical extension part 20A and is continued to the protruding part (23a, 23b) and the bulging part 22g. As a result, the dispersion in the up-down direction of the input load in the reinforcement member 20 can be further improved, and the twisting deformation of the reinforcement member 20 can be less likely to occur during normal use.

In the present embodiment, the first vehicle body structural member 31 is provided with the inner impact absorbing part 33 that protrudes from the first vehicle body structural member 31 toward the outward side of the vehicle in the vehicle front-rear direction, and the projecting parts 21 of the transverse extension part 20B are coupled to the first vehicle body structural member 31 via the inner impact absorbing part 33. Therefore, the impact load input to the reinforcement member 20 can be effectively absorbed as deformation energy of the inner impact absorbing part 33.

In the present embodiment, the inner impact absorbing part 33 includes at least two impact absorbing pieces 33a that are spaced apart from each other in the vehicle width direction on each of one side in the vehicle width direction and the other side in the vehicle width direction, and the at least two impact absorbing pieces 33a are coupled by the coupling stay 34. Therefore, since the impact load transmitted to the projecting parts 21 is efficiently disposed in the vehicle width direction, the transverse extension part 20B is easily deformed entirely in the vehicle width direction without being locally deformed, whereby the impact energy can be effectively absorbed.

In the present embodiment, a second vehicle body structural member 32 is provided with the support bracket 35 that protrudes from the second vehicle body structural member 32 in the upward direction of the vehicle, and the containing part 22 is coupled to the second vehicle body structural member 32 via the support bracket 35. The impact load input to the reinforcement member 20 can be effectively absorbed as the deformation energy of the support bracket 35.

Although an embodiment of the present invention has been described, the present invention is not limited to the embodiment and may be further modified and changed on the basis of the technical concept of the present invention.

For example, in the present embodiment, in the explanation of each element, one end side of the vehicle up-down direction refers to the upper side of the vehicle up-down direction, but the present invention is not limited thereto. One end side of the vehicle up-down direction may refer to the lower side of the vehicle up-down direction. In this case, the transverse extension part 20B of the reinforcement member 20 is located on the lower side of the vertical extension part 20A in the vehicle up-down direction, the projecting part 21 projects from the lower end side of the vertical extension part 20A toward the outside in the vehicle width direction, the reinforcement member 20 is formed substantially into an inverted T-shape in planar view, the position relationship between the first vehicle body structural member 31 and the second vehicle body structural member 32 is reversed, and the sensor device S is contained inside the containing part 22 in the upper part of the reinforcement member 20.

In the present embodiment, in the vehicle structure 1, the impact load input to the vehicle is dispersed mainly in the vehicle width direction by the transverse extension part 20B having the projecting parts 21, whereby the impact load is prevented from locally concentrating at and being input to the reinforcement member 20, but a main dispersion direction of the impact load is not limited to the vehicle width direction and may be the up-down direction. In this case, the reinforcement member 20 may have no projecting part 21, that is, the reinforcement member 20 need not be formed substantially into a T-shape. In a case in which the main dispersion direction of the impact load is the up-down direction, it is only required that the vehicle structure 1 include the inner impact absorbing part 33 and the support bracket 35, and the reinforcement member 20 be coupled to the first vehicle body structural member 31 via the inner impact absorbing part 33 and be coupled to the second vehicle body structural member 32 via the support bracket 35. In this case, the inner impact absorbing part 33 is provided at a position corresponding to the upper portion of the reinforcement member 20 in the first vehicle body structural member 31, for example. In this way, in the event of a front collision or a rear collision of the vehicle, the impact load input to the vehicle is dispersed in the up-down direction by the inner impact absorbing part 33 and the support bracket 35, making it easy for the impact load to be transmitted to the vehicle body structure 30 (the first vehicle body structural member 31, the second vehicle body structural member 32), whereby the impact load can be prevented from locally concentrating at and being input to the reinforcement member 20. Therefore, the input impact load is effectively absorbed as the deformation energy of the reinforcement member 20, the inner impact absorbing part 33, the support bracket 35 and the like, whereby the impact energy can be efficiently absorbed. Thus, even when the vehicle structure 1 has no projecting part 21, having the inner impact absorbing part 33 and the support bracket 35 makes it possible to provide the vehicle structure which enables the impact energy to be efficiently absorbed.

The outer panel 10 is a front bumper having the front grille 11a, but the present invention is not limited thereto. The outer panel 10 may be, for example, a front bumper having no front grille 11a or only the front grille 11a, or a decorative member (e.g., a metal-like member).

The sensor device S is not limited to a radar using millimeter waves or microwaves, it is only required that the sensor device S be a device that senses the outside-vehicle environment, and the sensor device S may be an ultrasound sensor that senses the outside-vehicle environment with ultrasound or an imaging device such as a camera that senses the outside-vehicle environment by capturing an image. The sensing wave passing region 12 of the outer panel 10 may be simply a through hole (opening).

In the present embodiment, the vehicle structure 1 is applied as a front structure of the vehicle, but the present invention is not limited thereto. The attachment site of the sensor device S is not limited to the front part of the vehicle, may be the rear part of the vehicle or the side part of the vehicle in some cases, and the vehicle structure 1 may be applied as the rear structure of the vehicle. In the case of the rear structure, the outer panel 10 is, for example, a rear bumper, a rear grille, a back panel, a rear door panel, or the like.

### [Reference Signs List]

- 1: vehicle structure
- 10: outer panel
- 11: bumper front surface
- 11a: front grille
- 12: sensing wave passing region
- 20: reinforcement member
- 20A: vertical extension part
- 20B: transverse extension part
- 20C: connection part
- 21: projecting part
- 21a: upper wall
- 21b: front wall
- 21c: front wall
- 22: containing part
- 22a: first vertical side part (vertical side part)
- 22a1: first inner wall
- 22a2: first outer wall
- 22a3: first end wall (end wall)
- 22b: second vertical side part (vertical side part)
- 22b 1: second inner wall
- 22b2: second outer wall
- 22b3: second end wall (end wall)
- 22c: upper connecting wall
- 22d: first front and rear wall
- 22e: bottom wall
- 22e1: harness insertion port
- 22f: second front and rear wall
- 22g: bulging part
- 23a: protruding part
- 23b: protruding part
- 24: inclined edge
- 30: vehicle body structure
- 31: first vehicle body structural member
- 311: first upper cross member
- 312: first lower cross member
- 312a: front portion
- 32: second vehicle body structural member
- 32a: upper portion
- 33: inner impact absorbing part (upper bracket)
- 33a: impact absorbing piece
- 34: coupling stay
- 35: support bracket (lower bracket)
- 36: panel impact absorbing part
- C1: first vehicle body coupling part
- C2: second vehicle body coupling part
- C3: sensor fixing part
- C4: panel coupling part
- L: protruding length of protruding part
- R: predetermined very small range
- S: sensor device
- Sa: sensor end surface
- X0: protruding leading end of protruding part
- X1: protruding leading end of panel impact absorbing part
- V1: lower region
- V2: lower region

## Claims

1. A vehicle structure comprising:
an outer panel that forms a design surface of an outside of a vehicle in a front part or a rear part of the vehicle;
a reinforcement member that reinforces the outer panel from a back surface side of the outer panel;
a sensor device that is attached to the reinforcement member and senses an outside-vehicle environment; and
a vehicle body structure that is provided on the back surface side of the outer panel and extends in a vehicle width direction, **characterized in that**
the reinforcement member includes a vertical extension part that extends in a vehicle up-down direction, and a transverse extension part that includes a projecting part on each side in the vehicle width direction, the projecting part projecting from one end side in the vehicle up-down direction of the vertical extension part toward an outward side in the vehicle width direction and being coupled to the vehicle body structure.

2. The vehicle structure according to claim 1, wherein
the vertical extension part includes a containing part in which the sensor device is contained.

3. The vehicle structure according to claim 1, wherein
the reinforcement member includes a connection part that connects the vertical extension part and the transverse extension part, and
the connection part is widened in a vehicle width direction toward the transverse extension part from the vertical extension part.

4. The vehicle structure according to claim 2, wherein
the containing part is provided on the other end side in a vehicle up-down direction of the vertical extension part and coupled to the vehicle body structure.

5. The vehicle structure according to claim 2, wherein
the containing part includes panel coupling parts to be coupled to the outer panel.

6. The vehicle structure according to claim 2, wherein
the containing part is provided in a portion on the other end side in a vehicle up-down direction of the vertical extension part,
the vehicle body structure includes a first vehicle body structural member, and a second vehicle body structural member that is spaced away from the first vehicle body structural member toward the other end side in a vehicle up-down direction,
the projecting parts are coupled to the first vehicle body structural member, and
the containing part is coupled to the second vehicle body structural member.

7. The vehicle structure according to claim 2, wherein
the reinforcement member includes an end wall that faces an outward side of a vehicle in a vehicle front-rear direction, and a protruding part that protrudes from the end wall and projects from the containing part toward an outward side of a vehicle in the vehicle front-rear direction.

8. The vehicle structure according to claim 7, wherein
the protruding part extends continuously toward the transverse extension part at a height position corresponding to a region on the one end side in a vehicle up-down direction in the containing part.

9. The vehicle structure according to claim 7, wherein
the containing part is formed in a recessed shape that is recessed toward an inward side of the vehicle in the vehicle front-rear direction, and is coupled to the vehicle body structure, and
the containing part includes a vertical side part that includes the end wall and extends in a vehicle up-down direction, a first front and rear wall that extends from a portion provided with the protruding part in the vertical side part toward an inward side of the vehicle in the vehicle front-rear direction, a bottom wall that extends from a vehicle inner end of the first front and rear wall toward the other end side in the vehicle up-down direction and faces a surface on an inward side of the vehicle in the vehicle front-rear direction of the sensor device, and a second front and rear wall that extends from an end on the other end side in the vehicle up-down direction of the bottom wall toward the outward side of the vehicle in the vehicle front-rear direction, and the containing part is coupled to the vehicle body structure at the second front and rear wall.

10. The vehicle structure according to claim 7, wherein
the vehicle body structure is provided with a panel impact absorbing part that protrudes from the vehicle body structure in the vehicle front-rear direction and is formed to have a rigidity lower than a rigidity of the vehicle body structure, and
a protruding leading end of the panel impact absorbing part and a protruding leading end of the protruding part are located in a predetermined very small range in the vehicle front-rear direction.

11. The vehicle structure according to claim 7, wherein
the reinforcement member includes a bulging part that bulges toward the outward side of the vehicle in the vehicle front-rear direction in a portion including the end wall.

12. The vehicle structure according to claim 11, wherein
the reinforcement member includes a connection part that connects the vertical extension part and the transverse extension part,
the connection part is widened in a vehicle width direction toward the transverse extension part from the vertical extension part, and
the connection part is continuous to the protruding part and the bulging part.

13. The vehicle structure according to claim 1, wherein
the vehicle body structure includes a first vehicle body structural member and a second vehicle body structural member that is spaced away from the first vehicle body structural member toward the other end side in a vehicle up-down direction,
the first vehicle body structural member is provided with an inner impact absorbing part that protrudes from the first vehicle body structural member toward the outward side of the vehicle in a vehicle front-rear direction and is formed to have a rigidity lower than a rigidity of the first vehicle body structural member,
the second vehicle body structural member is provided with a support bracket that protrudes from the second vehicle body structural member toward the one end side of the vehicle up-down direction and is formed to have a rigidity lower than a rigidity of the second vehicle body structural member, and
the reinforcement member is coupled to the first vehicle body structural member via the inner impact absorbing part and is coupled to the second vehicle structural member via the support bracket.

14. A vehicle structure comprising:
an outer panel that forms a design surface of an outside of a vehicle in a front part or a rear part of the vehicle;
a reinforcement member that reinforces the outer panel from a back surface side of the outer panel;
a sensor device that is attached to the reinforcement member and senses an outside-vehicle environment; and
a vehicle body structure that is provided on the back surface side of the outer panel and extends in a vehicle width direction, **characterized in that**
the vehicle body structure includes a first vehicle body structural member and a second vehicle body structural member that are spaced apart from each other in a vehicle up-down direction,
the first vehicle body structural member is provided with an inner impact absorbing part that protrudes from the first vehicle body structural member toward the outward side of the vehicle in a vehicle front-rear direction and is formed to have a rigidity lower than a rigidity of the first vehicle body structural member,
the second vehicle body structural member is provided with a support bracket that protrudes from the second vehicle body structural member toward a side of the first vehicle body structural member in a vehicle-up-down direction and is formed to have a rigidity lower than a rigidity of the second vehicle body structural member, and
the reinforcement member is coupled to the first vehicle body structural member via the inner impact absorbing part and is coupled to the second vehicle structural member via the support bracket.
